(19) Europäisches Patentamt
European Patent Office
Office européen des brevets

(11) **EP 3 451 669 A1**

(12) **EUROPEAN PATENT APPLICATION**

(43) Date of publication:
**06.03.2019 Bulletin 2019/10**

(21) Application number: **17306105.2**

(22) Date of filing: **29.08.2017**

(51) Int Cl.:
*H04N 19/70* (2014.01)    *H04N 19/56* (2014.01)
*H04N 19/533* (2014.01)   *H04N 19/57* (2014.01)
*H04N 19/52* (2014.01)    *H04N 19/119* (2014.01)
*H04N 19/103* (2014.01)   *H04N 19/46* (2014.01)
*H04N 19/513* (2014.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Thomson Licensing
92130 Issy-les-Moulineaux (FR)**

(72) Inventors:
• **ROBERT, Antoine**
  **35576 Cesson-Sévigné (FR)**
• **LELEANNEC, Fabrice**
  **35576 Cesson-Sévigné (FR)**
• **URBAN, Fabrice**
  **35576 Cesson-Sévigné (FR)**

(74) Representative: **Huchet, Anne et al
InterDigital CE Patent Holdings
20, rue Rouget de Lisle
92130 Issy-les-Moulineaux (FR)**

(54)    **METHODS AND APPARATUS FOR IMPROVED COMPRESSION/DECOMPRESSION USING FRAME RATE UP CONVERSION TOOLS**

(57)    Management of compression/decompression using frame rate up conversion tools is improved through use of flags in a video bitstream controlling both sub-portions of a video image and sub-processes. Instead of a single flag controlling frame rate up conversion tools, at least one embodiment uses additional signaling to determine whether an encoder or a decoder should implement frame rate up conversion tools for a particular video coding portion or whether to implement one of the processes associated with frame rate up conversion tools.

Figure 3

EP 3 451 669 A1

**Description**

FIELD OF THE INVENTION

The present principles relate to video compression and more particularly to performing video coding and decoding.

BACKGROUND OF THE INVENTION

Many attempts have been made to improve the coding efficiency of block-based codecs. Frame Rate Up-Conversion (FRUC) is a tool that allows derivation of motion vector predictors without any information, i.e. without supplemental syntax. The FRUC process is completely symmetric, in that the same operations are performed at the decoding side as at the encoding side.
This tool can only be fully on or off with one flag (as shown in Table 2) while it uses several sub-tools:

     AMVP (Advanced Motion Vector Prediction) blocks use one template matching cost function, and no signaling.

Merge blocks can use a sub-part refinement with the same process, with two different template matching cost functions, and with some signaling (off/on Template/ Bilateral).
Overall performances of the FRUC tool as well as of the different sub-tools over the Joint Exploration Model 4 (JEM 4) of the Joint Video Exploration Team (ITU-T VCEG (Q6/16) and ISO/IEC MPEG (JTC 1/SC 29/WG 11) are provided in Table 1.

| | Random Access Main 10 | | | | |
|---|---|---|---|---|---|
| | Over HM-16.6-JEM-4.0 (parallel) | | | | |
| | Y | U | V | EncT | DecT |
| FRUC | -3.60% | -3.72% | -3.92% | 139% | 142% |
| AMVP | -0.85% | -0.77% | -0.85% | 107% | 110% |
| Merge | -2.85% | -3.13% | -3.33% | 128% | 133% |
| Sub-part | -0.43% | -0.52% | -0.59% | 109% | 118% |
| Bilateral | -1.16% | -1.35% | -1.44% | 116% | 115% |

| | Low delay B Main10 | | | | |
|---|---|---|---|---|---|
| | Over HM-16.6-JEM-4.0 (parallel) | | | | |
| | Y | U | V | EncT | DecT |
| FRUC | -2.41% | -3.28% | -3.39% | 161% | 162% |
| AMVP | -0.41% | 0.17% | -0.28% | 113% | 116% |
| Merge | -2.09% | -3.65% | -3.79% | 132% | 136% |
| Sub-part | -0.48% | -0.99% | -0.79% | 114% | 117% |
| Bilateral | -1.03% | -2.06% | -2.10% | 120% | 120% |

| | Low delay P Main10 | | | | |
|---|---|---|---|---|---|
| | Over HM-16.6-JEM-4.0 (parallel) | | | | |
| | Y | U | V | EncT | DecT |
| FRUC | -1.38% | -1.33% | -1.53% | 128% | 119% |
| AMVP | -0.16% | -0.12% | -0.45% | 115% | 109% |
| Merge | -1.27% | -1.48% | -1.32% | 114% | 109% |
| Sub-part | -0.21% | -0.42% | -0.45% | 104% | 104% |
| Bilateral | 0.00% | 0.00% | 0.00% | 106% | 100% |

**Table 1** Performances of the FRUC tools and sub-tools over the JEM4 [2]

Moreover, several of these sub-tools use parameters. Some of them are already in the syntax as shown in Table 2, but the others are absent.

In Table 2, sps_use_FRUC_mode is the on/off flag for the whole FRUC tool, FRUC_refine_filter allows changing the sub-pel interpolation filter, FRUC_refine_range in_pel defines the maximum integer pel range for refinement, and FRUC_small_blk_refine_depth the maximum depth for sub-parts of FRUC Merge blocks (i.e. their minimum size).

**Table 2** SPS syntax of the current FRUC tool

| ... | |
|---|---|
| sps_use_FRUC_mode | u(1) |
| if( sps_use_FRUC_mode ) { | |
| FRUC_refine_filter | ue(v) |
| FRUC_refine_range_in_pel | ue(v) |
| FRUC_small_blk_refine_depth | ue(v) |
| } | |

## SUMMARY OF THE INVENTION

These and other drawbacks and disadvantages of the prior art are addressed by the present described embodiments, which are directed to a method and apparatus to manage a trade-off between the coding efficiency provided by FRUC tools and its complexity.

According to an aspect of the described embodiments, there is provided a method. The method comprises steps for encoding a portion of a video image, comprising performing frame rate up conversion for a portion of a video image; including a first flag in a video bitstream, the first flag indicative of the frame rate up conversion; and including a second flag in said video bitstream, said second flag further indicative of said frame rate up conversion.

According to another aspect of the described embodiments, there is provided a method. The method comprises steps for decoding a portion of a video image, comprising parsing a video bitstream to identify a first flag; parsing a video bitstream to identify a second flag, and performing frame rate up conversion for a portion of a video image based on the first flag and the second flag.

According to another aspect of the described embodiments, there is provided an apparatus. The apparatus comprises a memory and a processor. The processor can be configured to encode a portion of a video signal by performing frame rate up conversion for a portion of a video image; including a first flag in a video bitstream, the first flag indicative of the frame rate up conversion; and including a second flag in said video bitstream, said second flag further indicative of said frame rate up conversion.

According to another aspect of the described embodiments, there is provided an apparatus. The apparatus comprises a memory and a processor. The processor can be configured to decode a portion of a video signal by parsing a video bitstream to identify a first flag; parsing a video bitstream to identify a second flag, and performing frame rate up conversion for a portion of a video image based on the first flag and the second flag.

These and other aspects, features and advantages of the present principles will become apparent from the following detailed description of exemplary embodiments, which is to be read in connection with the accompanying drawings.

## BRIEF DESCRIPTION OF THE DRAWINGS

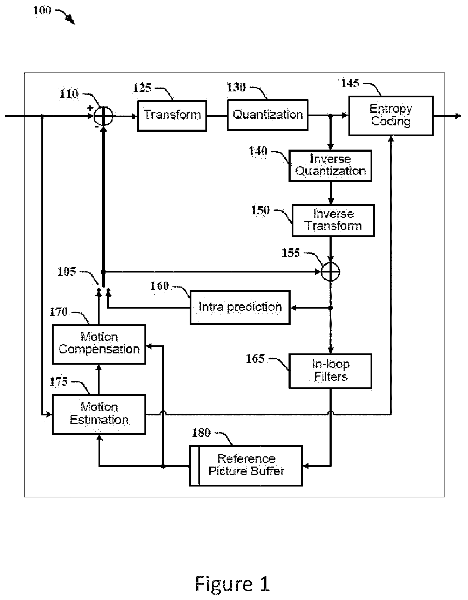

Figure 1 illustrates a block diagram for a typical video encoder to which the proposed embodiments can be applied.

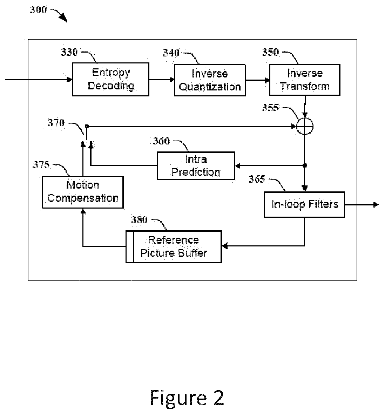

Figure 2 illustrates a block diagram for a typical video decoder to which the proposed embodiments can be applied.
Figure 3 illustrates one embodiment of a method for encoding using the described embodiments.
Figure 4 illustrates one embodiment of a method for decoding using the described embodiments.
Figure 5 illustrates one embodiment of an apparatus for encoding or decoding using the described embodiments.

## DETAILED DESCRIPTION

The domain of the embodiments described herein is video compression, intended to improve the video compression efficiency of state of the art video coding schemes.

An exemplary coding tool recently introduced in the Joint Exploration Model (JEM) is called FRUC (Frame Rate Up Conversion), or also pattern matched motion derivation, and aims at decoder side motion block-based motion vector predictor derivation.

The Frame Rate Up-Conversion (FRUC) tool aims at finding the best motion vector predictor (MVP) among a set of candidates with respect to a template matching cost. The best identified candidate is then refined towards the minimum template matching cost.

The FRUC processes are similar for every type of block: one process is performed for the whole block then, for some particular blocks, a second process on sub-parts can also be achieved. The main difference between these processes is the initial list of candidates and the available template matching cost functions.

In order to manage the trade-off between the performances of this FRUC tool and its complexity, it is possible to inform the decoder of which FRUC processes (or sub-processes, i.e. parts of processes) are allowed or not.

The problem solved by the embodiments described herein is to manage the trade-off between the coding efficiency provided by the FRUC tool and its complexity, as for example, in the JEM video codec.

The FRUC tool is applied to all blocks (Merge and AMVP) and refined at a sub-part, or a sub-block, level of Merge blocks. For AMVP blocks, only one template matching cost function is available, "Template". For Merge blocks and their sub-parts, two different template matching cost functions are tested, "Template" and "Bilateral".

Template matching derives motion information of a current coding unit by finding the best match between a template (the top and/or left neighboring blocks of a current coding unit) in a current picture and a block, having same size as the template, in a reference picture.

Bilateral matching derives motion information of the current coding unit by finding the best match between two blocks along the motion trajectory of the current coding unit in two reference pictures.

The sub-parts of Merge blocks are sub-blocks. In FRUC Merge, the FRUC tool is applied firstly at the CU (Coding Unit) level, then this CU is divided into sub-blocks and the FRUC tool is applied again for each of the sub-blocks with the same template matching cost functions as for the CU.

When the SPS (Sequence Parameter Set) FRUC flag is on, the FRUC tool is used/tested at the encoding side and is enabled at the decoding side.

For AMVP, the FRUC tool allows finding an AMVP candidate derived in the same way at encoding and decoding without signaling.

For Merge, the FRUC Merge mode is tested at the encoding side, then there is some signaling which indicates whether FRUC should be used or not, and if it is used, with which template matching cost function (there are three states: off/template/bilateral).

For a Merge CU, when the FRUC tool is activated (at SPS level), a first flag signals the Merge mode, then a second one the FRUC state. The decoder reads these flags and so knows if the FRUC tool must be used for this CU.

CU -> Merge flag = 0 => AMVP (with FRUC)
                 = 1 => Merge + FRUC mode = off            => classical Merge
                     = Temp/bilat => FRUC Merge + template matching cost function

In other words, currently a flag at the SPS (Sequence Parameter Set) level enables whether the FRUC tool is used. When activated, every AMVP block, at the encoding and decoding sides, goes to the FRUC tool without signaling, and every Merge block, also at the encoding side but with some signaling (off/on Template/Bilateral) goes to the FRUC tool.

The solution proposed by the aspects herein comprises adding some high-level syntax to allow management of the trade-off between the coding efficiency provided by the FRUC tool and its complexity.

As shown in Table 1, the overall performance of the FRUC tool is huge, in the JEM4, it brings 3.60% BDrate gain in RA (Random Access), 2.41% in LDB (Low Delay-B) and 1.38% in LDP (Low Delay-P), but with also a huge amount of complexity of about 40% in RA, 60% in LDB and 30% in LDP either at encoding and at decoding.

In this FRUC tool, there are several sub-processes that each bring coding gains but also add complexity, but they are all activated with a unique flag at the SPS level.

It is advantageous to be able to manage the trade-off between the coding gain and the complexity by using some new high-level syntax to indicate which sub-tools are to be used and with which parameters or to activate particular tools on a sub-block or sub-part basis. For example, disabling the sub-parts of FRUC Merge blocks allows saving 10-15% encoding time (RA/LDB) and nearly 20% decoding time for a BD-rate loss of less than 0.5%.

In a first embodiment, the FRUC AMVP sub-tool can be enabled/disabled from the initial FRUC tools with one flag using the syntax from Table 3.

**Table 3** Syntax of the flag enabling/disabling FRUC AMVP

| if( sps_use_FRUC_mode ) { | |
|---|---|
| FRUC_amvp | u(1) |
| } | |

In a second embodiment, the whole FRUC Merge sub-tool, with sub-parts and both template matching cost functions, can be enabled/disabled from the initial FRUC tools with one flag using the syntax from Table 4.

**Table 4** Syntax of the flag enabling/disabling the whole FRUC Merge

| if( sps_use_FRUC_mode ) { | |
|---|---|
| FRUC_merge | u(1) |
| } | |

In a third embodiment, the sub-parts of FRUC Merge sub-tool can be enabled/disabled from the initial FRUC tools with one flag using the syntax from Table 5.

**Table 5** Syntax of the flag enabling/disabling the sub-parts of FRUC Merge

| if( sps_use_FRUC_mode ) { | |
|---|---|
| FRUC_merge_subblock | u(1) |
| } | |

In a fourth embodiment, the Bilateral template matching cost function of FRUC Merge sub-tool can be enabled/disabled from the initial FRUC tools with one flag using the syntax from Table 6.

**Table 6** Syntax of the flag enabling/disabling the Bilateral template matching cost function of FRUC Merge

| if(sps_use_FRUC_mode) { | |
|---|---|
| FRUC_merge_bilateral | u(1) |
| } | |

In a fifth embodiment, the whole FRUC Merge sub-tool can be enabled/disabled from the initial FRUC tools with one flag, then either the sub-parts or the Bilateral template matching cost function of FRUC Merge sub-tool can also be enabled/disabled with one flag only when the FRUC Merge sub-tool is enable.

For that purpose, the syntax should follow either Table 7 or Table 8 where FRUC_merge_xxx stands for FRUC_merge_subblock or FRUC_merge_bilateral or both.

**Table 7** Syntax of the flags enabling/disabling the whole FRUC Merge, and sub-parts and/or bilateral template matching cost function when FRUC Merge is enable

| if( sps_use_FRUC_mode ) { | |
|---|---|
| FRUC_merge | u(1) |
| if(FRUC_merge) { | |
| FRUC_merge_xxx | u(1) |
| } | |
| } | |

**Table 8** Independent syntax of the flags enabling/disabling the whole FRUC Merge, and sub-parts and/or bilateral template matching cost function when FRUC Merge is enable

| if( sps_use_FRUC_mode ) { | |
|---|---|
|     FRUC_merge | u(1) |
| } | |
| if(sps_use_FRUC_mode && FRUC_merge ) { | |
|     FRUC_merge_xxx | u(1) |
| } | |

In a sixth embodiment, the FRUC AMVP and the whole FRUC Merge sub-tools can be enabled/disabled from the initial FRUC tools, each with one flag. Then, the sub-parts and the Bilateral template matching cost function of FRUC Merge sub-tool can also be enabled/disabled with one flag using the syntax from Table 9 or Table 10.

**Table 9** Syntax of the flags enabling/disabling the FRUC AMVP and the whole FRUC Merge, and sub-parts and/or bilateral template matching cost function when FRUC Merge is enable

| if(sps_use_FRUC_mode) { | |
|---|---|
|     FRUC_amvp | u(1) |
|     FRUC_merge | u(1) |
|     if(FRUC_merge) { | |
|         FRUC_merge_subblock | u(1) |
|         FRUC_merge_bilateral | u(1) |
|     } | |
| } | |

**Table 10** Independent syntax of the flags enabling/disabling the FRUC AMVP and the whole FRUC Merge, and sub-parts and/or bilateral template matching cost function when FRUC Merge is enable

| if(sps_use_FRUC_mode) { | |
|---|---|
|     FRUC_amvp | u(1) |
|     FRUC_merge | u(1) |
| } | |
| if(sps_use_FRUC_mode && FRUC_merge) { | |
|     FRUC_merge_subblock | u(1) |
|     FRUC_merge_bilateral | u(1) |
| } | |

If FRUC_amvp and FRUC_merge flags are used together, at least one must be "true" (otherwise when both flags are "false", it is the same as turning all the FRUC tool off (sps_use_FRUC_mode == "false")).

Furthermore, any other combination of the first four embodiments can be observed.

In a seventh embodiment, some of the parameters that are not already in the syntax can also be added in order to manage more finely the trade-off between coding gains and complexity.

These parameters can be, but are not limited to: the refinement search pattern (diamond, hexagon, cross, etc.), the number of refinement loops, the template matching size for Template function, the weight applied to the motion vector cost during refinement, the maximum number of candidates to be evaluated, the maximum value for the template matching cost, or other such parameters.

Each of these parameters can be specified either for all the processes or for each kind of block (AMVP, Merge) or sub-parts or any combination as shown on the exemplary Table 11.

**Table 11** Syntax example of several FRUC parameters

| if(sps_use_FRUC_mode) { | |
|---|---|
| FRUC_refine_pattern | ue(v) |
| FRUC_refine_pattern_sub | ue(v) |
| FRUC_refine_loops | ue(v) |
| FRUC_refine_loops_sub | ue(v) |
| FRUC_temp_size_amvp | ue(v) |
| FRUC_temp_size_merge | ue(v) |
| FRUC_nb_cand_amvp | ue(v) |
| FRUC_nb_cand_merge | ue(v) |
| FRUC_nb_cand_sub | ue(v) |
| ... | |
| } | |

In an eighth embodiment, any flag introduced from embodiments 1 to 6 can be coupled with any parameter from embodiment 7.

In a ninth embodiment, such high-level syntax can take place in different NAL units as: VPS (Video Parameter Set) in the "Profile, tier, level" as a general information, SPS (Sequence Parameter Set), PPS (Picture Parameter Set), or SH (Slice Header).

The syntax location used depends on the granularity that is needed, i.e. at the VPS and SPS level it will be activated for the whole sequence, at the PPS level for a set of frames, and at the SH for each frame independently.

Syntax from embodiments 1, 2, 3, 4, 5 Table 7, 6 Table 9 and 7 can take any location in the bitstream. The first part of the syntax from embodiments 5 Table 8 and 6 Table 10 can appear also at any location, but the second part should follow, either at the same level or at a deeper level. For example, AMVP/Merge could be defined for the whole sequence at the SPS level and the subblock/bilateral for each frame at the SH level.

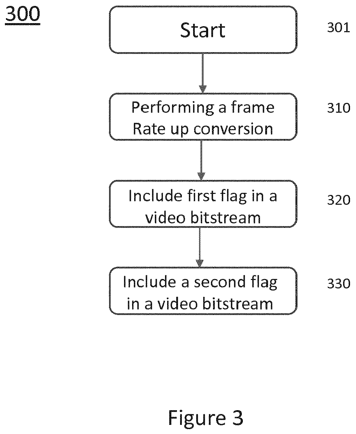

One embodiment of a method 300 for performing frame rate up conversion in an encoder for a portion of a video image is shown in Figure 3. The method commences at Start block 301 and proceeds to block 310 for performing frame rate up conversion for a portion of a video image. Control proceeds from block 310 to block 320 for including a first flag in a video bitstream, the first flag indicative of the frame rate up conversion. Control proceeds from block 320 to block 330 for including a second flag in the video bitstream, the second flag further indicative of said frame rate up conversion. The second flag can be used to indicate additional features of the frame rate conversion process, such as performance for a sub-part of a block or coding unit, or implementing one or more sub-processes of the frame rate up conversion process.

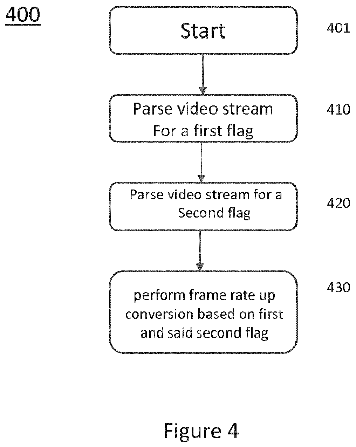

One embodiment of a method 400 for performing frame rate up conversion in a decoder for a portion of a video image is shown in Figure 4. The method commences at Start block 401 and commences to block 410 for parsing a video bitstream to identify a first flag. Control proceeds from block 410 to block 420 for parsing a video bitstream to identify a second flag. Control proceeds from block 420 to block 430 for performing frame rate up conversion for a portion of a video image based on the first flag and the second flag.

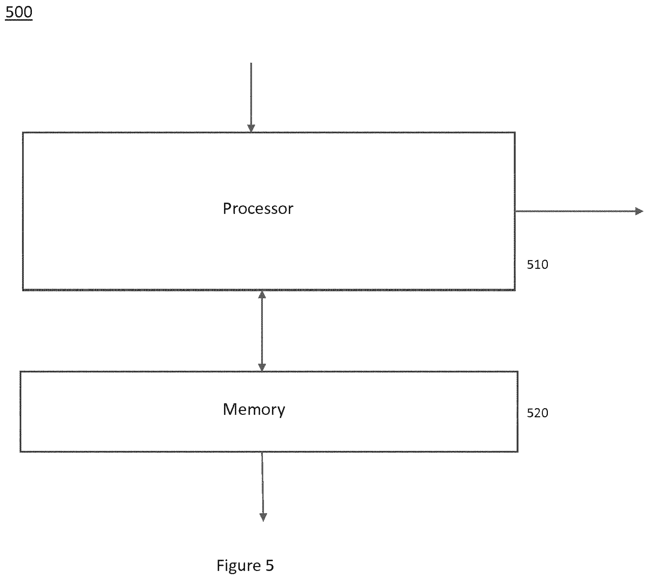

One embodiment of an apparatus 500 for encoding or decoding a block in a video image is shown in Figure 5. The apparatus comprises a Processor 510 and a Memory 520. The Processor 510 is configured, for encoding, to perform the steps of Figure 3, that is performing frame rate up conversion for a portion of a video image; including a first flag in a video bitstream, the first flag indicative of the frame rate up conversion; and including a second flag in the video bitstream, the second flag further indicative of the frame rate up conversion.

When Processor 510 is configured for decoding, it performs the steps of Figure 4, that is, decoding a video bitstream by parsing a video bitstream to identify a first flag; parsing a video bitstream to identify a second flag, and performing frame rate up conversion for a portion of a video image based on the first flag and the second flag.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

The present description illustrates the present principles. It will thus be appreciated that those skilled in the art will be able to devise various arrangements that, although not explicitly described or shown herein, embody the present principles and are included within its scope.

All examples and conditional language recited herein are intended for pedagogical purposes to aid the reader in understanding the present principles and the concepts contributed by the inventor(s) to furthering the art, and are to be construed as being without limitation to such specifically recited examples and conditions.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Reference in the specification to "one embodiment" or "an embodiment" of the present principles, as well as other variations thereof, means that a particular feature, structure, characteristic, and so forth described in connection with the embodiment is included in at least one embodiment of the present principles. Thus, the appearances of the phrase "in one embodiment" or "in an embodiment", as well any other variations, appearing in various places throughout the specification are not necessarily all referring to the same embodiment.

In conclusion, improved methods and apparatus of performing frame rate up conversion for a portion of a video image are shown by the aforementioned embodiments. In at least one embodiment, an encoder can signal to a decoder whether to use frame rate up conversion for only portions of a video image or a sub-part of a coding unit. In addition, flags are provided to use sub-processes of the frame rate up conversion process in an encoder or a decoder.

**Claims**

1. A method, comprising:

   performing frame rate up conversion for a portion of a video image;
   including a first flag in a video bitstream, said first flag indicative of said frame rate up conversion; and
   including a second flag in said video bitstream, said second flag further indicative of said frame rate up conversion.

2. A method, comprising:

   parsing a video bitstream to identify a first flag;
   parsing a video bitstream to identify a second flag, and
   performing frame rate up conversion for a portion of a video image based on said first flag and said second flag.

3. An apparatus, comprising:

   a memory, and

a processor, configured to perform:

performing frame rate up conversion for a portion of a video image;
including a first flag in a video bitstream, said first flag indicative of said frame rate up conversion; and
including a second flag in said video bitstream, said second flag further indicative of said frame rate up conversion.

4. An apparatus, comprising:

a memory, and
a processor, configured to perform:

parsing a video bitstream to identify a first flag;
parsing a video bitstream to identify a second flag, and
performing frame rate up conversion for a portion of a video image based on said first flag and said second flag.

5. The method of Claim 1 or 2, or the apparatus of Claim 3 or 4, wherein said second flag enables frame rate up conversion in a sub-block using merge mode.

6. The method of Claim 1 or 2, or the apparatus of Claim 3 or 4, wherein said second flag enables frame rate up conversion in a sub-block using bilateral matching in merge mode.

7. The method or the apparatus of Claim 5, wherein a third flag enables bilateral matching or template matching to be performed on a sub-block of said video image.

8. The method of Claim 1 or 2, or the apparatus of Claim 3 or 4, wherein said second flag enables adaptive motion vector prediction in a portion of a video image, and further comprising:

performing merge mode for a portion of a video image consistent with a third flag and a fourth flag;
performing bilateral template matching on a portion of the video image consistent with a third flag and a fifth flag.

9. The method of Claim 1 or 2, or the apparatus of Claim 3 or 4, further comprising:

using syntax elements in said bitstream for performing frame rate up conversion, comprising refinement search pattern, number of refinement loops, template matching size, motion vector cost weight, maximum number of candidates to be evaluated, and maximum value for template matching cost.

10. The method of Claim 1 or 2, or the apparatus of Claim 3 or 4, wherein any of said flags are located in a video parameter set.

11. The method of Claim 1 or 2, or the apparatus of Claim 3 or 4, wherein any of said flags are located in a sequence parameter set.

12. The method of Claim 1 or 2, or the apparatus of Claim 3 or 4, wherein any of said flags are located in a picture parameter set.

13. A non-transitory computer readable medium containing data content generated according to the method of any one of claims 1 and 5 to 12, or by the apparatus of any one of claims 3 and 5 to 12, for playback using a processor.

14. A signal comprising video data generated according to the method of any one of claims 1 and 5 to 12, or by the apparatus of any one of claims 3 and 5 to 12, for playback using a processor.

15. A computer program product comprising instructions which, when the program is executed by a computer, causes the computer to carry out the method of any one of claims 2 and 5 to 12.

Figure 1

Figure 2

300

```
┌─────────────────────┐
│        Start        │  301
└─────────────────────┘
           │
           ▼
┌─────────────────────┐
│  Performing a frame │  310
│  Rate up conversion │
└─────────────────────┘
           │
           ▼
┌─────────────────────┐
│ Include first flag in a │  320
│   video bitstream   │
└─────────────────────┘
           │
           ▼
┌─────────────────────┐
│ Include a second flag │  330
│  in a video bitstream │
└─────────────────────┘
```

Figure 3

400

| Start | 401 |

Parse video stream
For a first flag
410

Parse video stream for a
Second flag
420

perform frame rate up
conversion based on first
and said second flag
430

Figure 4

500

Processor

510

Memory

520

Figure 5

Europäisches
Patentamt

European
Patent Office

Office européen
des brevets

# EUROPEAN SEARCH REPORT

Application Number

EP 17 30 6105

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN J ET AL: "Algorithm description of Joint Exploration Test Model 6 (JEM6)", 6. JVET MEETING; 31-3-2017 - 7-4-2017; HOBART; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-F1001, 31 May 2017 (2017-05-31), XP030150793, * paragraph [2.3.1.3] * * pages 21-24 * | 1-15 | INV. H04N19/70 H04N19/56 H04N19/533 H04N19/57 H04N19/52 H04N19/119 H04N19/103 H04N19/46 H04N19/513 |
| X | LI XIANG ET AL: "Frame Rate Up-Conversion Based Motion Vector Derivation for Hybrid Video Coding", 2017 DATA COMPRESSION CONFERENCE (DCC), IEEE, 4 April 2017 (2017-04-04), pages 390-399, XP033095342, DOI: 10.1109/DCC.2017.8 [retrieved on 2017-05-09] * the whole document * | 1-15 | |
| A | US 2009/168884 A1 (LU XIAOAN [US] ET AL) 2 July 2009 (2009-07-02) * paragraph [0056] * | 1-15 | TECHNICAL FIELDS SEARCHED (IPC) H04N |

The present search report has been drawn up for all claims

| Place of search | Date of completion of the search | Examiner |
|---|---|---|
| Munich | 8 February 2018 | McGrath, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 30 6105

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-2018

| Patent document cited in search report | | Publication date | Patent family member(s) | | Publication date |
|---|---|---|---|---|---|
| US 2009168884 | A1 | 02-07-2009 | EP 1982530 | A2 | 22-10-2008 |
| | | | JP 2009526436 | A | 16-07-2009 |
| | | | KR 20080096768 | A | 03-11-2008 |
| | | | US 2009168884 | A1 | 02-07-2009 |
| | | | WO 2007092255 | A2 | 16-08-2007 |

EPO FORM P0459

For more details about this annex : see Official Journal of the European Patent Office, No. 12/82